# EUROPÄISCHE PATENTSCHRIFT

(11) **EP 1 141 070 B1**
(45) Veröffentlichungstag und Bekanntmachung des Hinweises auf die Patenterteilung: **16.10.2002**
(21) Anmeldenummer: 99959318.9
(22) Anmeldetag: 24.11.1999
(51) Int. Cl.: C08G 18/80

(54) **MALONESTER/TRIAZOLMISCHBLOCKIERTES HDI-TRIMERISAT/FORMALDEHYDSTABILISIERUNG**
MALONIC ACID ESTER/TRIAZOLE MIXED BLOCKED HDI TRIMER/FORMALDEHYDE STABILIZATION
STABILISATION DE TRIMERE/FORMALDEHYDE A BASE DE HDI BLOQUES PAR MELANGE D'ESTER MALONIQUE/DE TRIAZOL

(30) Priorität: 07.12.1998 DE 19856412; 10.12.1998 DE 19856968
(43) Veröffentlichungstag der Anmeldung: 10.10.2001
(73) Patentinhaber: Bayer Aktiengesellschaft, 51368 Leverkusen (DE)
(72) Erfinder: KÖNIG, Eberhard, D-51375 Leverkusen (DE); MEIER-WESTHUES, Hans-Ulrich, D-51379 Leverkusen (DE); KLIMMASCH, Thomas, D-51379 Leverkusen (DE)
(86) Internationale Anmeldenummer: EP9909069
(87) Internationale Veröffentlichungsnummer: WO00034356

(56) Entgegenhaltungen:
- EP-A- 0 584 818
- EP-A- 0 829 500
- EP-A- 0 947 531

## Beschreibung

Die vorliegende Erfindung betrifft blockierte Polyisocyanat-Vernetzer, deren Herstellung und Verwendung in 1K-Einbrennlacken, insbesondere OEM-Klarlacken (Originalequipmentmaterial, Erstlackierung).

Bekanntlich werden blockierte Polyisocyanate als verbessernde Zusätze in 1K-Einbrennlacken bei der Automobillackierung eingesetzt. Mit blockierten Polyisocyanaten lassen sich anspruchsvolle Forderungen an verbesserte lacktechnische Eigenschaften relativ gut crfüllen. Andere Eigenschaften, wie z.B. eine niedrige Einbrenntemperatur bis max. 140°C oder geringe Thermovergilbung beim Überbrennen, können dagegen nicht mit allen zur Verfügung stehenden Rohstoffen erzielt werden.

Die bedeutendsten technischen Lackpolyisocyanate basieren auf 1,6-Diisocyanatohexan (HDI). Als im technischen Maßstab verfügbare Blockierungsmittel für Polyisocyanate bieten sich, wenn man Deblockierungstemperaturen von maximal 140°C in Betracht zieht, Malonester und 1,2,4-Triazol an. Die Kombination aus HDIbasierten Polyisocyanaten mit Malonester oder 1,2,4-Triazol oder, wie nachfolgendes Vergleichsbeispiel belegt, mit einem Gemisch aus Malonester/1,2,4-Triazol, führt nicht zu einem brauchbaren lagerstabilen und flüssigen Lackvemetzer, weil diese Produkte auskristallisieren. Die Kristallisationstendenz von malonesterblockierten HDI-Polyisocyanaten ist bereits aus der EP-A 600 314, diejenige von triazolblockierten Polyisocyanaten aus den EP-A 654 490 und 741 157 bekannt.

Die Aufgabe der Erfindung bestand darin, mit Malonester und 1,2,4-Triazol mischblockierte HDI-basierte Polyisocyanate so zu modifizieren, daß flüssige, in Lösemitteln nicht kristallisierende Vernetzer für 1K-Einbrennlacke resultieren.

Diese Aufgabe konnte mit den nachfolgend beschriebenen blockierten Polyisocyanaten gelöst werden.

Gegenstand der Erfindung sind aliphatische und/oder cycloaliphatische Polyisocyanate, deren Isocyanatgruppen zu
A) 5 - 95, vorzugsweise 70 bis 30 Äquivalent-% mit einem CH-aciden Ester,
B) 5 - 95, vorzugsweise 70 bis 30 Äquivalent-% mit 1,2,4-Triazol und
C) 0 - 10 Äquivalent-% mit anderen, von A) und B) verschiedenen Blockierungsmitteln
blockiert (umgesetzt) vorliegen, dadurch gekennzeichnet, daß sie 0,05 - 1,0 Mol Formaldehyd in eingebauter Form, bezogen auf 100 Äquivalent-% blockierter NCO-Gruppen, enthalten.

Gegenstand der Erfindung ist auch ein Verfahren zur Herstellung der erfindungsgemäßen, nicht kristallisierenden blockierten Polyisocyanate aus
a) 100 Äquivalent-% an aliphatischen und/oder cycloaliphatischen Polyisocyanatkomponenten,
b) 5 - 95, vorzugsweise 70 bis 30 Äquivalent-% eines Blockierungsmittels aus der Gruppe der CH-aciden Ester,
c) 5 - 95, vorzugsweise 70 bis 30 Äquivalent-% an 1,2,4-Triazol,
d) 0 - 10 Äquivalent-% an einem von b) und c) verschiedenen Blockierungsmittel und
e) 0,05 - 1,0 Mol an Formaldehyd
dadurch gekennzeichnet, daß der Formaldehyd mit katalytischen Mengen einer Base nach der vollständigen Umsetzung der vorhandenen NCO-Gruppen zugesetzt und abreagiert wird.

Die erfindungsgemäßen, nicht kristallisierenden blockierten Polyisocyanate können vorzugsweise einen Gehalt an Stabilisatoren gegen Thermovergilbung in Höhe von
0,1 -6,0 Gew.-% an Hydraziden mit der Struktureinheit der Formel (I) 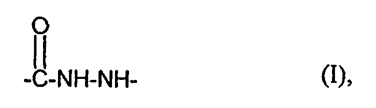 und
   0,1 - 5,0 Gew.-% an "HALS-Aminen" mit der Struktureinheit der Formel (II) 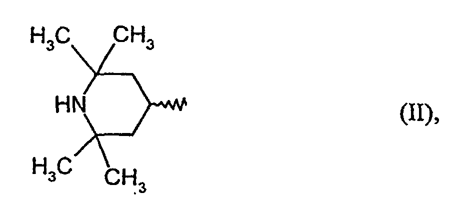 enthalten.

Derartige Stabilisatoren sind z.B. aus der EP-A 829 500 bekannt.

Gegenstand der Erfindung ist schließlich auch die Verwendung der erfindungsgemäßen blockierten Polyisocyanate als Vernetzer für organische Polyhydroxylverbindungen in Polyurethan-Einbrennlacken, beispielsweise für Automobil-Klarlacke.

Erfindungswesentlich für die beanspruchten Polyisocyanat-Vernetzer ist der Gehalt an Formaldehyd. Der Formaldehyd zeigt überraschenderweise zwei Wirkungsweisen: Zum einen verhindert er die Kristallisation der blockierten Polyisocyanate, insbesondere dann, wenn die Polyisocyanatkomonente auf HDI basiert. Zum anderen erhöht er die Resistenz der blockierten Polyisocyanate gegenüber Thermovergilbung.

Auf 100 Äquivalent-% blockiertes Polyisocyanat werden vorzugsweise 0,1 bis 0,4 Mol Paraformaldehyd eingesetzt und mittels eines Katalysators, wie z.B. Na-Methylat, einreagiert. Dies sind ca. 0,8 bis 5,0 Gew.-% Formaldehyd, bezogen auf blockiertes Polyisocyanat. Ganz besonders bevorzugt ist ein Formaldehydgehalt von 2,0 bis 3,0 Gew.-%, bezogen auf blockiertes Polyisocyanat.

### Das erfindungsgemäße Verfahren wird folgendermaßen durchgeführt:

Die Polyisocyanatkomponente wird ggf. zusammen mit wenig Lösemittel, z.B. 1-Methoxy-2-propylacetat (MPA), bei ca. 50°C vorgelegt, der CH-acide Ester, z.B. Malonester, wird als Mischung mit ca. 2 % einer 30 %igen Na-Methylatlösung hinzudosiert und bei 70-90°C bis zum berechneten NCO-Gehalt abreagiert. Danach wird die kalkulierte Menge an 1,2,4-Triazol, gelöst in weiterem MPA, hinzugegeben und bei ca. 90°C abreagiert, so daß keine NCO-Gruppen mehr nachweisbar sind. Man kühlt den Ansatz auf ca. 45°C ab und gibt die klare Lösung aus Paraformaldehyd, etwa 3 %, bezogen auf Paraformaldehyd, an einer 30 %igen Na-Methylatlösung als Base und Isobutanol hinzu und rührt bei 45°C ca. 1 Std. nach. Der Formaldehyd wird dabei eingebaut, sein freier Gehalt liegt an der analytischen Nachweisgrenze. Man fügt ca. 0,5 %, bezogen auf Ansatz, an Dibutylphosphat hinzu und stellt damit auf einen pH von ca. 7,5 - 7,0 ein. In diese klare Lösung können entsprechend der erfindungsgemäß besonderen Ausführungsform zusätzlich noch andere Stabilisatoren gegen Thermovergilbung gegeben werden.

Bei den den erfindungsgemäßen blockierten Polyisocyanaten zugrundeliegenden Polyisocyanaten handelt es sich um bekannte Lackpolyisocyanate mit aliphatisch und/oder cycloaliphatisch und/oder aromatisch gebundenen Isocyanatgruppen und einem Isocyanatgehalt von 7 bis 30, vorzugsweise 12 bis 25 Gew.-%.

Vorzugsweise eingesetzt werden an sich bekannte Biuret-, Isocyanurat-, Urethan-, Allophanat- und/oder Uretdiongruppen aufweisende Lackpolyisocyanate auf Basis von 1,6-Diisocyanatohexan (HDI), 1-Isocyanato-3,3,5-trimcthyl-5-isocyanatomethylcyclohexan (IPDI) und/oder Bis-(4-isocyanatocyclohexyl)-methan (H₁₂MDI bzw. Desmodur W®/Bayer AG). Außerdem können als Polyisocyanatkomponenten die asymmetrisch trimerisierten, also neben Isocyanurat auch über Iminooxadiazindiongruppen verfügende Lackpolyisocyanate auf Basis von 1,6-Diisocyanatohexan eingesetzt werden, wie sie z.B. in der EP-A 798 299 beschrieben sind.

Es können auch Polyisocyanate auf Basis anderer Isocyanate wie z.B. Diisocyanatobutan-1,4, 2,4- bzw. 2,6-Diisocyanato-1-methyl-cyclohexan, 2,5- und/oder 2,6-Bisisocyanato-norboman, 3- und/oder 4-Isocyanatomethyl-1-methylcyclohexan, 1,4-Bis-(2-isocyanato-prop-2-yl)-benzol, 1,3-Diisocyanatomethylbenzol, 1,3- oder 1,4-Bisisocyanatomethylcyclohexan eingesetzt werden.

Ganz besonders bevorzugt als Polyisocyanatkomponente sind jedoch Isocyanuratgruppen aufweisende Polyisocyanate auf Basis von 1,6-Diisocyanatohexan.

Als Blockierungskomponente kommen einerseits CH-acide Ester, beispielsweise Malonsäurediethylester oder Acetessigsäureethylester und/oder deren Methyl-, Isopropyl-, Isobutyl- oder tert.-Butyl-Derivate in Betracht. Bevorzugt ist Malonsäurediethylester. Andererseits wird in dieser Mischblockierung 1,2,4-Triazol eingesetzt. Letzeres ist großtechnisch aus 1 Mol Hydrazinhydrat und mindestens 2 Mol Formamid zugänglich. Die CH-aciden Ester bzw. Triazol können in Mengen von jeweils 5-95 Äquivalent-%, vorzugsweise von jeweils 20-80 Äquivalent-%, eingesetzt werden.

Als weitere Blockierungsmittel können in Mengen bis zu 50 Äquivalent-%, vorzugsweise bis zu 20 Äquivalent-% und besonders bevorzugt bis zu 10 Äquivalent -% mitverwendet werden: Oxime, wie z.B. Butanonoxim, sekundäre Amine, z.B. Diisopropylamin, NH-acide Heterocyclen, wie z.B. Imidazol oder 3,5-Dimethylpyrazol oder Lactame, z.B. ε-Caprolactam.

Als zusätzliche Stabilisierungskomponenten können die aus der EP-A 0 829 500 bekannten Stabilisatoren eingesetzt werden. Bevorzugt sind in diesem Zusammenhang das durch Addition von Hydrazinhydrat an 2 Mol Propylencarbonat gut zugängliche einbaubare Hydrazid der Formel (Ia) 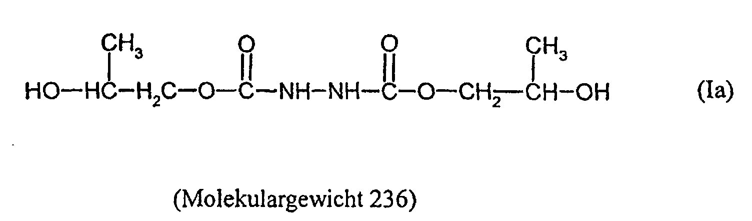 und das am N-Atom unsubstituierte HALS-Amin Tinuvin 770 DFΘ (Fa. Novartis). Vom erstgenannten Stabilisator werden hierbei vorzugsweise 3 bis 6 Gew.-%, vom letztgenannten vorzugsweise 0,5 bis 1,5 Gew.-%, jeweils bezogen auf blockiertes Polyisocyanat, eingesetzt.

An Lösemitteln können die an sich aus der Polyurethanchemie bekannten, gegen NCO-Gruppen inerten Lösemittel, beispielsweise 1-Methoxy-2-propylacetat, Solventnaphta 100 oder Butylacetat, verwendet werden. Sind die NCO-Gruppen blockiert, so verwendet man auch bevorzugt Alkohole, z.B. Isobutanol, um eine Umesterung mit den Alkoholresten des Blockierungsmittels zu ermöglichen.

Die Vorteile der erfindungsgemäßen Polyisocyanatvcrnetzer, nämlich gute Lagerstabilität, d.h. keine Kristallisation, getinge Thermovergilbung und gute lacktechnische Eigenschaften, werden anhand der folgenden Beispiele erläutert.

### Beispiele

### Beispiel 1 (erfindungsgemäß)

Dieses mischblockierte Polyisocyanat ist mit 3,0 % an Formaldehyd, bezogen auf den Festkörper der blockierten Polyisocyanate, stabilisiert. Das Verhältnis der Blockierungsmittel liegt für Malonester: Triazol = 40 : 60 Äquivalent-%, bezogen auf 100 Äquivalent-% NCO-Gruppen.

| **Ansatz** | | |
|---|---|---|
| 200,0 g (1 Val) | eines isocyanurathaltigen Lackpolyisocyanates auf Basis von 1,6-Diisocyanatohexan (HDI) mit einem NCO-Gehalt von ca. 21% | |
| 64,0 g (0,4 Mol) | Malonsäurediethylester | |
| 41,4 g (0,6 Mol) | 1,2,4-Triazol | |
| 9,0 g (0,3 Mol) | Paraformaldehyd | |
| 65,2 g | Methoxypropylacetat | |
| 65,2 g | Isobutanol | |
| 434,8 g(1,0 Val) | blockierte NCO-Gruppen | |
| | | |
| | Festkörpergehalt: | 70 % |
| | blockierter NCO-Gehalt: | 9,6 % |
| | Viskosität bei 23°C: | ca. 6.000 mPas |
| | Aussehen: | klar, fast farblos |
| | NCO-Äquivalent: | 435 g |

### Durchführung

Polyisocyanat und Methoxypropylacetat werden vorgelegt und auf ca. 50°C erwärmt. Zu dieser gerührten Lösung gibt man die Mischung aus Malonester und 1,2 g Na. Methylatlösung (30 %ig in Methanol) und rührt ca. 2 Std. bei 70°C nach, bis der berechnete NCO-Gehalt von 7,6 % unterschritten ist. Dann fügt man die farblosen Schuppen von Triazol hinzu, steigert die Innentemperatur auf 90°C und rührt ca. 3 Std. nach, bis keine NCO-Gruppen mehr nachweisbar sind. Man kühlt auf ca. 45°C ab und gibt die Lösung aus Paraformaldehyd, Isobutanol und 0,3 g Na. Methylatlösung (30 %ig) hinzu und rührt 1 Std. bei 40 - 45°C nach. Schließlich fügt man 2,1 g Dibutylphosphat hinzu und erhält eine klare, fast farblose, über 6 Monate lagerstabile Lösung eines blockierten Polyisocyanat-Vemetzers.

### Beispiel 2 (Vergleichsbeispiel)

Dieses Beispiel gleicht in Art und Menge dem Beispiel 1 mit der Ausnahme, daß die Modifizierung des blockierten Polyisocyanates mit Formaldehyd weggelassen wird. Es resultiert ein Produkt, das nach einer Woche Lagerung bei Raumtemperatur auszukristallisieren beginnt. Damit kann dieses blockierte Polyisocyanat nicht in lagerstabilen 1K-Lack-Formulierungen eingesetzt werden.

### Beispiel 3 (erfindungsgemäß)

Dieses mischblockierte Polyisocyanat ist mit 2,7 %, bezogen auf den Festkörper des blockierten Polyisocyanates, stabilisiert. Daneben befinden sich noch zwei weitere Stabilisatoren (vergl. EP-A 829 500 A2) hinzugemischt in der blockierten Polyisocyanat-Lösung, nämlich 2,0 % eines bereits erläuterten Hydrazides und 1,0 % eines HALS-Amines.

| **Ansatz** | | |
|---|---|---|
| 300,0 g (1,5 Val) | eines isocyanurathaltigen Lackpolyisocyanates auf Basis von 1,6-Diisocyanatohexan (HDI) mit einem NCO-Gehalt von ca. 21 %, einer Viskosität bei 23°C von ca. 3.000 mPas und einer Funktionalität von ca. 3,5 | |
| 120,0 g (0,75 Mol) | Malonsäurediethylester | |
| 51,7 g (0,75 Mol) | 1,2,4-Triazol | |
| 13,5 g (0,45 Mol) | Paraformaldehyd | |
| 4,9 g (1 % / FK) | Tinuvin® 770 DF (Novartis AG) | |
| 9,8 g (2 % / FK) | des im Test erläuterten Hydrazin-Adduktes aus 1 Mol Hydrazinhydrat und 2 Mol Proplylencarbonat mit Molekulargewicht 236 | |
| 107,8 g | Methoxypropylacetat | |
| 107,8 g | Isobutanol | |
| 715,5 g (1,5 Val) | blockierte NCO-Gruppen | |
| | | |
| | Festkörpergehalt: | 70 % |
| | blockierter NCO-Gehalt: | 8,8 % |
| | Viskosität (23°C): | ca. 5.000 mPas |
| | Aussehen: | klar, Hazen 60 |
| | NCO-Äquivalent (blockiert): | 477 g |

### Durchführung

Das Polyisocyanat und Methoxypropylacetat werden vorgelegt. Bei ca. 50°C und unter Rühren trägt man die Mischung aus Malonsäurediethylester mit ca. 2 %, d. h. 2,4 g, Na-Methylatlösung (30 %ig in Methanol) portionsweise ein. Man erhöht die Temperatur auf 70°C und rührt für ca. 1½ Std., bis der berechnete NCO-Gehalt von 5,95 % unterschritten ist. Danach gibt man die farblosen Schuppen von 1,2,4-Triazol hinzu, erhöht die Temperatur auf 90°C und rührt ca. 3 Std. nach, bis keine NCO-Gruppen mehr nachweisbar sind (IR-Spektrum). Man kühlt auf 45°C ab und fügt die Lösung aus einer Teilmenge an Isobutanol, Paraformaldehyd und 0,5 g Na-Methylatlösung (30%ig) hinzu. Es wird ca. 1 Std. bei 45°C nachgerührt. Danach wird Tinuvin 770 DF, das beschriebene Hydrazin-Addukt und die Restmenge an Isobutanol hinzugegeben. Schließlich rührt man noch 3,5 g Dibutylphosphat ein und erhält eine klare, lagerstabile, fast farblose (Hazen 60) Lösung des mischblockierten Polyisocyanatvernetzers mit einem NCO-Äquivalent (blockiert) von 477 g.

### Beispiel 4 (Anwendungsbeispiel)

Der Vernetzer gemäß Beispiel 3 wird mit nachfolgenden Komponenten zu einem Klarlack gemischt. Dieser Klarlack wird auf Prüfbleche, die mit einem handelsüblichen weißen Basislack, z.B. von der Fa. Spies & Hecker/Köln, beschichtet sind in einer Naßschichtdicke von ca. 120 bis 150 µm appliziert und, wie in nachfolgender Tabelle erläutert ist, eingebrannt und getestet.

| **Rezeptur** | |
|---|---|
| 37,2 g | Desmophen® A VP LS 2009/1, 70 %ig in BA (Bayer AG), OH-Äquivalent 565 g |
| 31,4 g | Vernetzer gemäß Beispiel 3, Mischungsverhältnis NCO : OH = 1 : 1 |
| 0,5 g | Dibutylzinndilaurat, 100 %ig |
| 11,2 g | Methoxypropylacetat/Solventnaphta®100 (1/1) |

| **Ergebnisse der lacktechnischen Prüfung** | |
|---|---|
| Spritzfestkörper bei 23 s Auslaufzeit % | ca. 50 % |
| Einbrennbedingungen | 30' 140°C |
| Pendeldämpfung (Schwingungen)¹⁾ | 143 |
| (s) | 200 |
| Lösemittelbeständigkeit (Note*)²⁾ | |
| (X/MPA/EA/AC) 1 min | 1234 |
| 5 min | 2244 |
| Chemikalienbeständigkeit (°C)³⁾ | |
| (Gradientenofenmethode) | |
| Baumharz | 36 |
| Bremsflüssigkeit | 36 |
| Pankreatin, 50 % | 36 |
| NaOH, 1 % | 36 |
| H₂SO₄, 1 % | 41 |
| FAM; 10 min. (Note*) | 2 |
| Thermovergilbung⁴⁾ | |
| Klarlack auf LM-Basislack | |
| Ausgangsvergiblung (b) | 0,1 |
| Überbrennvergilbung bei 30' 160°C (Δb) | 1,9 |
| Klarlack auf H₂O-Basislack | |
| Ausgangsvergilbung (b) | -1,2 |
| Überbrennvergilbung bei 30' 160°C ((Δb) | 1,2 |
| Kratzfestigkeit (Laborwaschstraße)⁵⁾ | |
| Ausgangsglanz 20° | 90,8 |
| Glanzverlust nach 10 Waschzyklen | 23,2 |

| | |
|---|---|
| *) 0 - gut; 5 - schlecht Wie man sieht, zeigt das erfindungsgemäße System insgesamt gute Lackeigenschaften. ¹⁾ DIN ISO 1522 ²⁾ Bayer-Prüfmethode; Beurteilung nach DIN 53230 ³⁾ in Anlehnung an Daimler-Benz-Prüfmethode ⁴⁾ DIN 6174 (CIELAB) ⁵⁾ in Anlehnung an DFO-Prüfmethode Deutsche Forschungsgesellschaft für Oberflächenbehandlung e.V. Düsseldorf | |

## Patentansprüche

1. Aliphatische und/oder cycloaliphatische Polyisocyanate, deren Isocyanatgruppen zu
A) 5 - 95 Äquivalent-% mit einem CH-aciden Ester,
B) 5 - 95 Äquivalent-% mit 1,2,4-Triazol und
C) 0 - 50 Äquivalent-% mit anderen, von A) und B) verschiedenen Blockierungsmitteln
blockiert (umgesetzt) vorliegen, **dadurch gekennzeichnet, daß** sie 0,05 - 1,0 Mol Formaldehyd in eingebauter Form, bezogen auf 100 Äquivalent-% blockierter NCO-Gruppen enthalten.

2. Verfahren zur Herstellung der erfindungsgemäßen, nicht kristallisierenden blockierten Polyisocyanate aus
a) 100 Äquivalent-% an aliphatischen und/oder cycloaliphatischen Polyisocyanatkomponenten,
b) 5 - 95 Äquivalent-% eines Blockierungsmittels aus der Gruppe der CH-aciden Ester,
c) 5 - 95 Äquivalent-% an 1,2,4-Triazol,
d) 0 - 10 Äquivalent-% an einem von b) und c) verschiedenen Blockierungsmittel und
e) 0,05 - 1,0 Mol an Formaldehyd
**dadurch gekennzeichnet, daß** der Formaldehyd mit katalytischen Mengen einer Base nach der vollständigen Umsetzung der vorhandenen NCO-Gruppen zugesetzt und abreagiert wird.

3. Blockierte Polyisocyanate nach Anspruch 1, **dadurch gekennzeichnet, daß** sie einen Gehalt an Stabilisatoren gegen Thermovergilbung in Höhe von
0,1 -6,0 Gew.-% an Hydraziden mit der Struktureinheit der Formel (I) 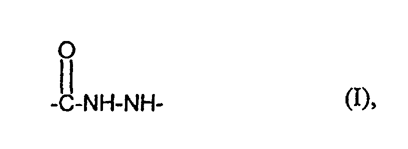 und
0,1 - 6,0 Gew.-% an "HALS-Aminen" mit der Struktureinheit der Formel (II) 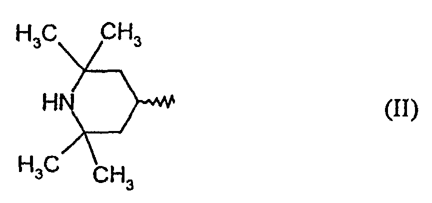 enthalten.

4. Verwendung der blockierten Polyisocyanate nach Anspruch 1 als Vernetzer für organische Polyhydroxylverbindungen in Polyurethan-Einbrennlacken, beispielsweise für Automobil-Klarlacke.

## Claims

1. Aliphatic and/or cycloaliphatic polyisocyanates, wherein
A) 5 - 95 equivalent % of the isocyanate groups thereof are blocked (reacted) with an acidic CH ester,
B) 5 - 95 equivalent % of the isocyanate groups thereof are blocked (reacted) with 1,2,4-triazole, and
C) 0 - 50 equivalent % of the isocyanate groups thereof are blocked (reacted) with other blocking agents which are different from A) and B),
**characterised in that** they contain 0.05 - 1.0 mol formaldehyde in incorporated form with respect to 100 equivalent % of blocked NCO groups.

2. A method of producing the non-crystallising blocked polyisocyanates according to the invention from
a) 100 equivalent % of aliphatic and/or cycloaliphatic polyisocyanate components,
b) 5 - 95 equivalent % of a blocking agent from the group comprising acidic CH esters,
c) 5 - 95 equivalent % of 1,2,4-triazole,
d) 0 - 10 equivalent % of a blocking agent which is different from b) and c), and
e) 0.05-1.0 mol formaldehyde,
**characterised in that** the formaldehyde is added with catalytic amounts of a base after complete reaction of the NCO groups present, and is reacted out.

3. Blocked polyisocyanates according to claim 1, **characterised in that** they have a content of stabilisers which counteract thermal yellowing amounting to 0.1 - 6.0 % by weight of hydrazides comprising a structural unit of formula (I) 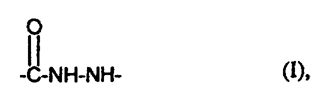 and
0.1 - 5.0 % by weight of "HALS amines" comprising a structural unit of formula (II)

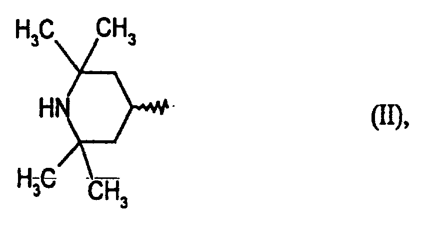

4. Use of the blocked polyisocyanates according to claim 1 as crosslinking agents for organic polyhydroxyl compounds in polyurethane stoving lacquers, for automobile clear lacquers for example.

## Revendications

1. Polyisocyanates aliphatiques et/ou cycloaliphatiques dont les groupes isocyanates sont bloqués (par réaction chimique)
A) pour 5 à 95 équivalents % par un ester à CH acide,
B) pour 5 à 95 équivalents %, par le 1,2,4-triazole, et
C) pour 0 à 50 équivalents %, par des agents bloquants autres que A) et B),
**caractérisés en ce qu'**ils contiennent de 0,05 à 1,0 mol de formaldéhyde à l'état chimiquement combiné, pour 100 équivalents % de groupes NCO bloqués.

2. Procédé pour la préparation des polyisocyanates bloqués non cristallisables selon l'invention, à partir de
a) 100 équivalents % de composants polyisocyanates aliphatiques et/ou cycloaliphatiques,
b) 5 à 95 équivalents % d'un agent bloquant du groupe des esters à CH acide,
c) 5 à 95 équivalents % de 1,2,4-triazole,
d) 0 à 10 équivalents % d'un agent bloquant autre que b) et c) et
e) 0,05 à 1,0 mol de formaldéhyde,
**caractérisé en ce que** le formaldéhyde est ajouté et mis à réagir avec des quantités catalytiques d'une base après réaction complète des groupes NCO présents.

3. Polyisocyanates bloqués selon revendication 1, **caractérisés en ce qu'**ils contiennent dès stabilisants contre le jaunissement à la chaleur, à raison de
0,1 à 6,0 % en poids d'hydrazides contenant le motif de structure de formule (I) 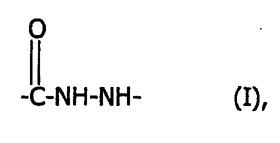 et
0,1 à 5,0 % en poids d'amines du type "HALS" contenant le motif de structure de formule (II)

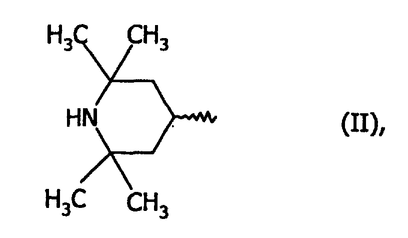

4. Utilisation des polyisocyanates bloqués selon revendication 1 en tant qu'agents réticulants pour des composés organiques polyhydroxylés dans des vernis de polyuréthane à cuire au four, par exemple pour des vernis clairs pour automobiles.
